# EUROPEAN PATENT APPLICATION

(11) **EP 4 818 543 A1**
(43) Date of publication of application: **07.10.2026**
(21) Application number: 26163247.5
(22) Date of filing: 09.03.2026
(51) Int. Cl.: F16D 25/08, F16D 48/02

(54) **SPRING RELEASED HYDRAULIC APPLIED ACTUATOR FOR A WORK VEHICLE**

(30) Priority: 31.03.2025 IT 202500006693
(71) Applicant: CNH Industrial Italia S.p.A., 10156 Torino (IT)
(72) Inventor: Forte, Michelantonio, 10156 Turin (IT)
(74) Representative: CNH Industrial IP Department

(57) **Abstract**

A hydraulic actuator (1) for a dog clutch (100) comprising a housing (3) extending along a reference axis (B) and defining at least one closed inner volume (4), a rod (12) extending along the reference axis (B), engaging in a slidable manner the housing (3), and configured to be operatively connected the actuation member (160) of the dog clutch assembly (100), a first piston (14) cooperating in a fluid tight and slidable manner with the housing (3) and configured to define a first variable volume chamber (16), a second piston (16) housed the housing (3) and configured to define a second variable volume chamber (16), a septum fluidly separating the first chamber (16) from the second chamber (20). The first piston (14) and the second piston (16) are slidably carried by the rod (12) and configured to push the rod (12) in two opposite directions.

## Description

### TECHNICAL FIELD

The present invention relates to a hydraulic actuator for a transmission of a work vehicle, in particular for a dog clutch assembly of a transmission of a work vehicle.

The present invention finds its preferred, although not exclusive, application in an agricultural vehicle, such as a tractor. Reference will be made to this application by way of example below.

### BACKGROUND OF THE INVENTION

As is known, a dog clutch (also known as dog box or positive clutch) is a type of clutch in which torque transmission occurs via engagement of interlocking teeth between two gears, rather than by friction.

Conventional dog clutches assemblies generally comprise:
- a rotating sliding sleeve carried by a first transmission shaft in an axially slidable and angularly rigid manner, for instance by means of a spline,
- a first toothed wheel rigidly carried by the sliding sleeve,
- a second toothed wheel connected to a second transmission shaft and adapted to selectively engage with the first toothed wheel, to allow torque transmission between the first and the second transmission shaft, and
- a selector device, for example a fork, which is adapted to axially move the rotating sliding sleeve in order to selectively engage the first toothed wheel with the second toothed wheel and allow motion transmission between the two transmission shafts.

In addition, the aforementioned dog clutch assembly further comprises a hydraulic actuator operatively connected to the fork and configured to move the same fork, in order to move the sliding sleeve and engage the corresponding toothed wheels.

The aforementioned dog clutches are generally positive dog clutches, in which the actuator device is required to apply an axial for only for a limited transient to move axially the fork and the sliding sleeve to allow engagement of the corresponding toothed wheels. In addition, the tooths of the toothed wheels are shaped so as to maintain engagement once coupled.

The above configuration, however, is not adapted to be applied with negative dog clutches, in which it is required a constant application of an axial force on the sliding sleeve from the fork to maintain the toothed wheel engaged. Indeed, in a negative dog clutch, the teeth of the toothed wheels are shaped so as to generate an axial force that tends to disengage the wheels.

In particular, in such case, the hydraulic actuator is required to constantly apply on the fork an axial force to maintain the toothed wheels engaged, and at the same time is required to quickly disengage the toothed wheels when it is required to stop torque transmission of the dog clutch.

In view of the above, the need is felt for improvements in the field of work vehicles, in particular by addressing the aforementioned drawbacks and providing a hydraulic actuator for a negative dog clutch with simplified control and increased reliability.

Aim of the present invention is to satisfy the above mentioned needs in a cost effective and optimized manner.

### SUMMARY OF THE INVENTION

The aforementioned aim is reached by a spring released hydraulic applied actuator as claimed in the appended set of claims.

### BRIEF DESCRIPTION OF THE DRAWINGS

For a better understanding of the present invention, a preferred embodiment is described in the following, by way of a non-limiting example, with reference to the attached drawings, wherein:
- Figure 1 is a schematic side view of an exemplary embodiment of a dog clutch assembly, with parts in cross-section and parts removed for clarity;
- Figures 2 and 3 are side views of the clutch assembly illustrated in Figure 1, in different operating positions, with parts in cross-section and parts removed for clarity,
- Figure 4 is a side view of a hydraulic actuator according to the present invention, with parts in cross-section and parts removed for clarity; and
- Figures 5, 6, 7 and 8 are side views of the hydraulic actuator illustrated in Figure 2, in different operating positions, with parts in cross-section and parts removed for clarity.

### DETAILED DESCRIPTION OF THE INVENTION

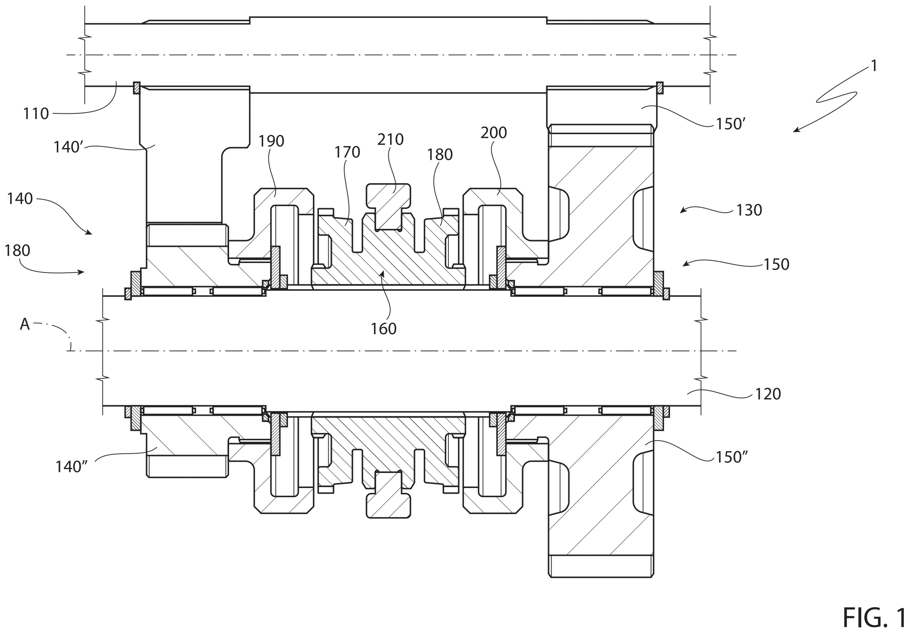

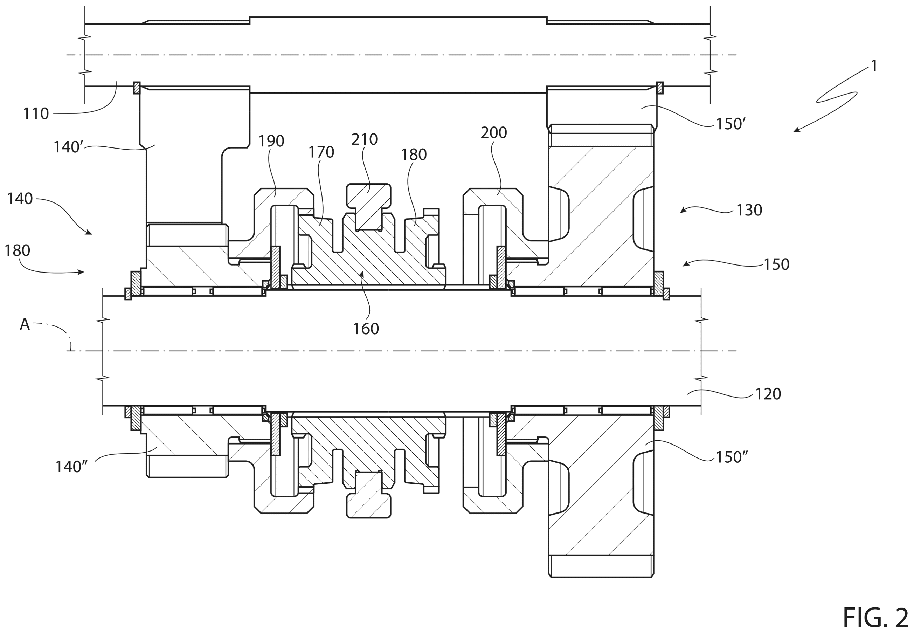

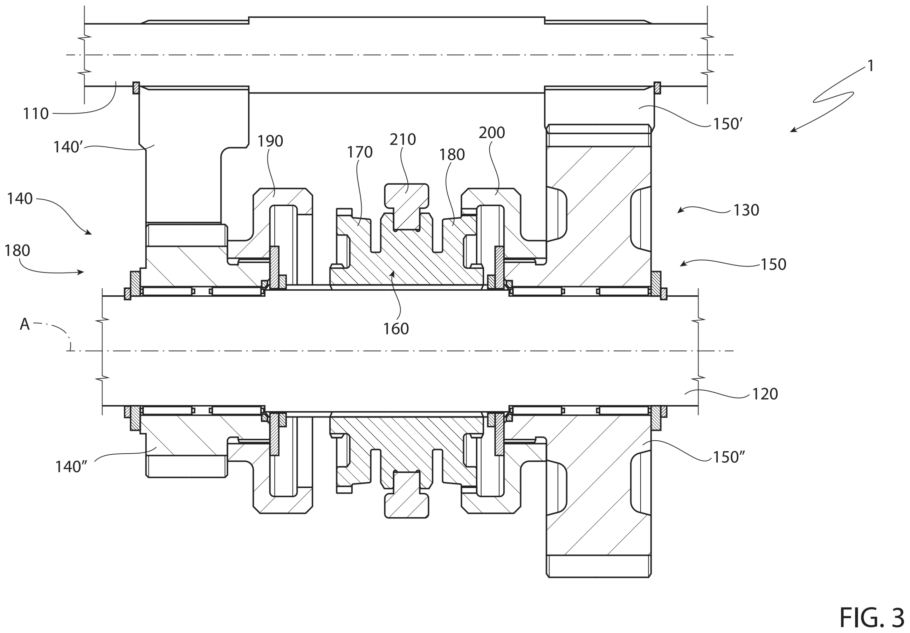

With reference to Figure 1, 2 and 3, number 100 denotes as a whole a dog clutch assembly of a transmission of a work vehicle (not illustrated), in particular for a transmission of an agricultural vehicle such as a tractor.

As per se known, the work vehicle comprises a work vehicle body resting on the ground by means of a plurality of ground engaging wheels or tracks.

In addition, as always known, the work vehicle comprises a powertrain assembly, which is carried by the work vehicle body and is configured to provide torque to allow motion of the work vehicle body with respect to the ground.

In particular, powertrain assembly comprises an engine, such as an internal combustion engine, and a transmission assembly operatively interposed between the engine and an axle shaft coupled at least to a pair of said ground engaging wheels or tracks to transmit these latter the torque provided at output by the engine.

As known, the transmission assembly comprises an input shaft (not illustrated) adapted to be connected to the engine of the work vehicle, and an output shaft adapted to be coupled to at least one drive axle of the work vehicle.

In addition, as per se known and therefore not described in detail, transmission assembly may comprise one or more friction clutches and a plurality of gears adapted to selectively engage the input shaft with the output shaft of the transmission assembly and define different gear ratios, so as to allow the torque transmission to the axle shaft coupled to the wheels.

More in detail, as always known, the transmission assembly may comprise, operatively connected in series to each other between input shaft and output shaft, an input stage carried by the input shaft, a gear ratio stage and a range gear ratio stage coupled to the output shaft of the same transmission assembly, to provide a plurality of transmission ratios between input shaft and output shaft.

The gears of the gear ratio stage and/or the range gear ratio stage may be selected by means of a selector mechanism, also known as dog clutch assembly.

According to the preferred embodiment of the present invention, the dog clutch assembly 100 may be a negative dog clutch assembly.

Dog clutch assembly 100 is configured to allow torque transmission between an input shaft 110 and an output shaft 120, by means of transmission means 130 operatively interposed between input shaft 110 and output shaft 120. Preferably, output shaft 120 extends along a reference axis A.

In other words, dog clutch assembly 100 is preferably interposed between input shaft 110 and output shaft 120 and is configured to selectively engage input shaft 110 with output shaft 120.

For example, transmission means 130 may comprise a pair of gears 140 and 150 operatively interposed between input shaft 110 and output shaft 120, and selectively adapted to transmit torque between input shaft 110 and output shaft 120.

Dog clutch assembly 100 may be interposed between transmission means 130 and may be configured to selectively engage one of such transmission means 130 to input shaft 110 or output shaft 120.

In particular, dog clutch assembly 100 may be configured to selectively engage one of such transmission means 130 by means of a selection member 160 configured to mechanically engage a corresponding engagement member 170 or 180 with the same transmission means 130.

For example, selection member 160 may comprise a sliding sleeve and a shifting fork, lever or similar mechanism 210 operatively connected to the sliding sleeve.

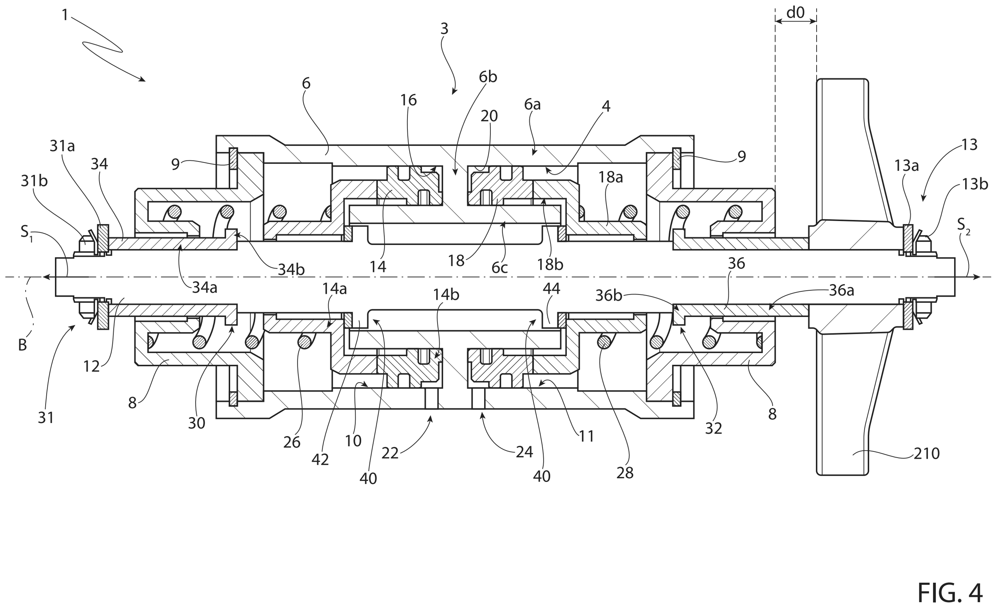

With reference to Figures 4 to 8 dog clutch assembly 100 is configured to be operatively connected to a hydraulic actuator 1, in order to be operated.

More in detail, hydraulic actuator 1 is preferably configured to be operatively connected to the shifting fork of dog clutch assembly 100, in order to operate this latter.

According to the preferred embodiment illustrated in Figure 1, hydraulic actuator 1 is preferably a double effect spring applied hydraulic actuator.

In particular, as explained more in detail in the following, hydraulic actuator 1 is configured to arrange normally, without hydraulic actuation, the shifting fork in a first neutral position in which transmission means 130 are not engaged, and is further configured to be actuated in order to selectively arrange the shifting fork in a second engaged position or in a third engaged position in which a corresponding transmission means 130 is engaged.

With reference to Figures 4 to 8, hydraulic actuator 1 comprises a housing 3 extending along a reference axis B and defining at least one closed inner volume 4.

Preferably, in use reference axis B is parallel to reference axis A.

In particular, housing 3 comprises a body 6 extending along reference axis B. Preferably, body 6 is tubular in shape, in particular cylindrical tubular and comprises two axial opening at the opposite ends thereof.

In addition, housing 3 preferably comprises a pair of case backs or heads or side covers 8, which are arranged at the two opposite ends of body 6, in order to close the corresponding axial openings.

Preferably, case backs 8 are separate and distinct from body 6.

Preferably, housing 3 further comprises retaining means 9, such as a Seeger ring or similar mechanical components, operatively interposed between body 6 and the corresponding base back 8 and configured to hold the same case back 8 abutting against body 6.

With reference to the exemplary embodiment illustrated in Figures 4 to 8, body 6 preferably comprises an outer tubular wall 6a, which extends along reference axis B. Case backs 8 are preferably coupled each with a corresponding end of outer tubular wall 6a.

Preferably, outer tubular wall 6a is further cylindrical in shape.

In addition, body 6 preferably comprises an inner radial wall 6b, which is carried by outer tubular wall 6a and extends cantilevered from outer tubular wall 6a inside closed inner volume 4. In particular, inner radial wall 6b lays in a plane substantially orthogonal to reference axis B.

More in detail, inner radial wall 6b extends seamlessly from outer tubular wall 6a and is preferably annular in shape. In other words, the height of inner radial wall 6b in radial direction is preferably lower than the radius of outer tubular wall 6a.

In addition, inner radial wall 6b is preferably arranged at the centre of outer tubular wall 6a along reference axis B.

With reference to the example illustrated in Figure 4 to 8, body 6 preferably comprises an inner tubular wall 6c, which extends along reference axis B cantilevered from the free end of inner radial wall 6b.

Preferably, inner tubular wall 6c is extends coaxially and/or concentrically with outer tubular wall 6a.

In addition, inner tubular wall 6c is preferably spaced from outer tubular wall 6a within closed inner volume 4 in radial direction.

Moreover, inner tubular wall 6c preferably extends cantilevered from inner radial wall 6b on both sides along reference axis B.

Preferably, the length of inner tubular wall 6c along reference axis B is lower than the length of outer tubular wall 6a.

In other words, inner radial wall 6b is preferably arranged substantially at the centre of inner tubular wall 6c along reference axis B.

With reference to the example illustrated in Figures 4 to 8, outer tubular wall 6a and inner tubular wall 6c are preferably shaped so as to define a first annular gap 10 and a second annular gap 11.

First annular gap 10 and second annular gap 11 are preferably arranged on opposite sides of inner radial wall 6b and they are spaced to each other along reference axis B. In other words, gap 10 and gap 11 are preferably separated by inner radial wall 6b.

As explained in detail in the following, the annular gaps 10 and 11 acts as pressure chambers for the pistons of the hydraulic actuator 1.

With reference to the preferred embodiment illustrated in Figures 4 to 8, hydraulic actuator 1 further comprises a rod 12, which extends along reference axis B and engages in a slidable and optionally fluid tight manner housing 3. More in detail, rod 12 is slidable within housing 3 along reference axis B. In addition, rod 12 is preferably arranged coaxial with reference axis B.

Preferably, the length along reference axis B of rod 12 is greater than the length of housing 3, such that the ends of rod 12 extends cantilevered from housing 3. In other words, rod 12 preferably passes through housing 3 and cooperates slidably in tight manner with this latter.

Preferably, the ends of rod 12 engage in a slidable and fluid tight manner the corresponding case backs 8.

Rod 12 is configured to be operatively connected to the actuation member of dog clutch assembly 100, in order to be able to operate this latter.

More in detail, one end of rod 12 preferably carries the shifting fork 210, in a rigid manner, such that fork 210 moves integral with rod 12, aside housing 3. In other words, fork 210 is preferably arranged outside housing 3.

In particular, the shifting fork 210 is preferably fitted on one end of rod 12, and is preferably rigidly coupled to this latter by means of locking means 13.

More in detail, according to the embodiment illustrated in Figures 4-8, locking means 13 comprise a ring/washer 13a, a threaded ring nut 13b and/or other similar mechanical components adapted to lock the shifting fork 210 on the rod 12.

In particular, such locking means 13 are preferably adapted to lock the shifting fork against a shoulder of rod 12, as described in the following.

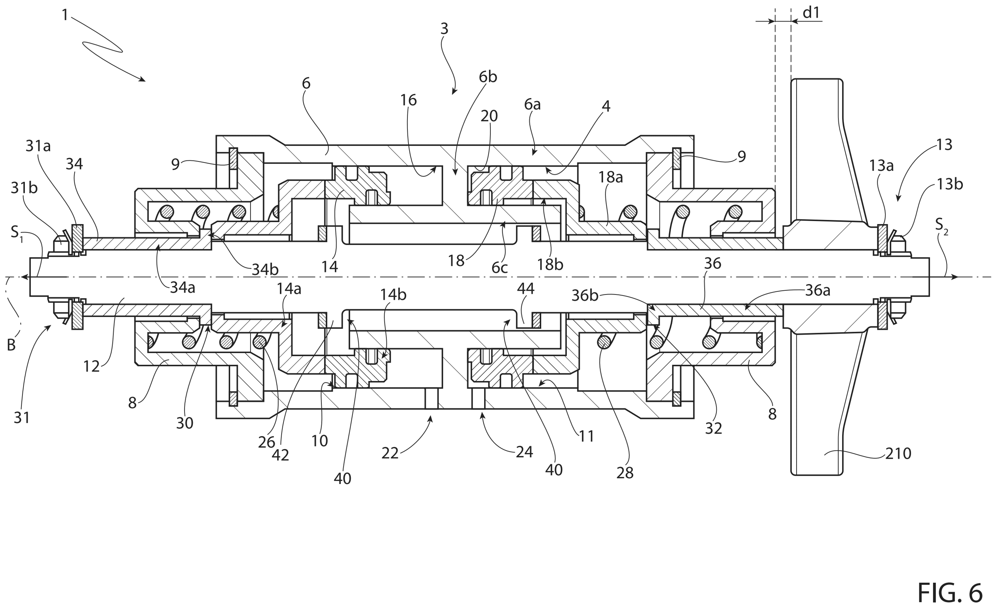

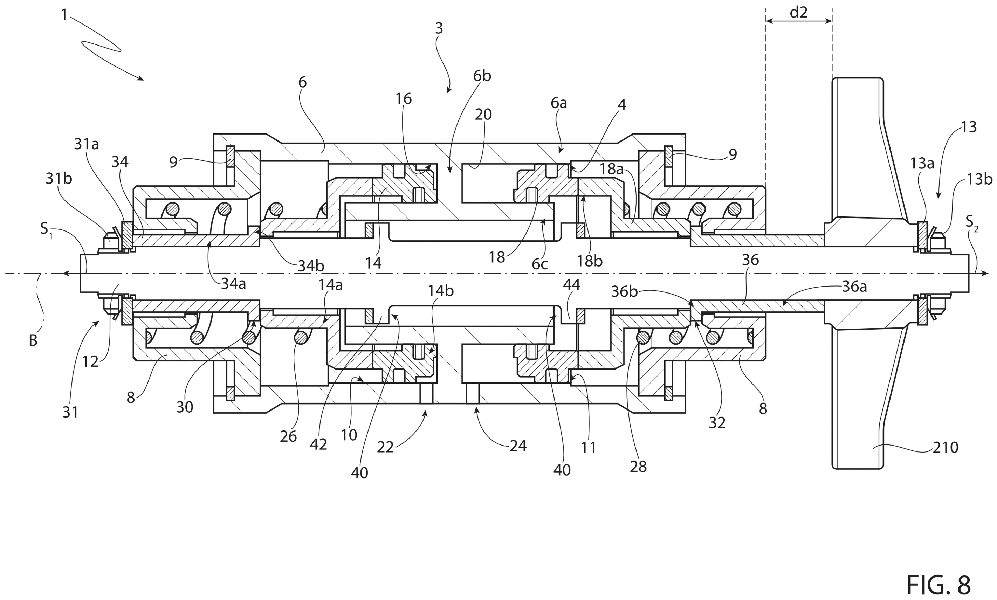

With reference to the preferred embodiment of the present invention, rod 12 is preferably movable along reference axis B between a first central position (Figures 4, 5 and 7), a second position (Figure 6) and a third position (Figure 8).

Preferably, in the first position, rod 12 is configured to arrange fork 210 in the first neutral position. In particular, in its first position, the distance along reference axis B between the fork 210 and the corresponding axial end of housing 3 (or case back 8) is equal to d₀.

Preferably, the distance d₀ is sized to allow the free stroke of rod 12 during the movement from the neutral position to the first engaged position or the second engaged position.

In the second position, rod 12 is configured to arrange fork 210 in the second engaged position. In particular, in its second position, the distance along reference axis B between the fork 210 and the corresponding axial end of housing 3 (or case back 8) is equal to d₁.

Moreover, in the third position, rod 12 is configured to arrange fork 210 in the third engaged position. In particular, in its third position, the distance along reference axis B between the fork 210 and the corresponding axial end of housing 3 (or case back 8) is equal to d₂.

Distances d₀, d₁ and d₂ are preferably correlated to each other by the following mathematical relation: d₁<d₀<d₂.

In other words, distance d₂ is the largest and distance d₁ is the smallest.

With reference to Figures 4 to 8, hydraulic actuator 1 further comprises at least a first piston 14 housed within closed inner volume 4 and configured to define at least a first variable volume chamber 16 within housing 3.

More in detail, piston 14 is annular in shape, is preferably fitted in a slidable manner on rod 12 and is configured to cooperate in contact, in a fluid tight and slidable manner, with housing 3, so as to define the first variable volume chamber 16 within the same housing 3.

In addition, hydraulic actuator 1 further comprises at least a second piston 18 housed within closed inner volume 4 and configured to define at least a second variable volume chamber 20 within housing 3.

More in detail, piston 18 is annular in shape, is preferably fitted in a slidable manner on rod 12 and is configured to cooperate in contact, in a fluid tight and slidable manner, with housing 3, so as to define the second variable volume chamber 20 within the same housing 3.

Second piston 18 is separate and distinct from first piston 14. In particular, first 14 and second piston 18 are preferably slidably carried by rod 12 in such a manner to be able to slide with respect to the same rod 12 along reference axis B one independent from the other.

As explained more in detail in the following, first piston 14 is configured to push rod 12 in a first direction s₁ along reference axis B, so as to arrange rod 12 in the second position.

In addition, second piston 18 is configured to push rod 12 in a second direction s₂ along reference axis B, so as to arrange rod 12 in the third position.

First direction s₁ and second direction s₂ are parallel to reference axis B and opposite to each other.

With reference to the example illustrated in Figures 4 to 8, housing 3 comprises a septum fluidly separating first variable volume chamber 16 and second variable volume chamber 20. First piston 14 and second piston 18 are arranged on opposite sides of said septum along reference axis B. In other words, first variable volume chamber 16 and second variable volume chamber 20 are arranged on opposite sides of said septum.

In addition, said septum is preferably annular in shape and is preferably engaged in a slidable manner by rod 12.

Moreover, said septum preferably lays on a plane transversal, in particular orthogonal, to reference axis B.

With reference to the preferred embodiment of the present invention illustrated in Figures 4 to 8, inner radial wall 6b and preferably inner tubular wall 6c concur to form the septum fluidly separating first 16 and second variable volume chamber 20.

In addition, first 16 and second variable volume chamber 20 are preferably annular in shape and are preferably arranged on opposite sides of inner radial wall 6b. More in detail, first 16 and second variable volume chamber 20 are preferably separated by inner radial wall 6b along reference axis B.

First piston 14 and second piston 20 are preferably arranged on opposite sides of inner radial wall 6b.

More in detail, first piston 14 and second piston 18 are preferably configured to engage respectively the first gap 10 and second gap 11 in a fluid tight and slidable manner.

Preferably, first piston 14 and second piston 18 are configured to cooperate in contact, in a fluid tight and slidable manner, with outer tubular wall 6a and inner tubular wall 6c respectively inside first gap 10 and second gap 11, so as to delimit variable volume chamber 16 and variable volume chamber 20 respectively.

In other words, first variable volume chamber 16 is preferably defined between outer tubular wall 6a, inner radial wall 6b, inner tubular wall 6c and first piston 14.

Second variable volume chamber 20, on the other hand, is preferably defined between outer tubular wall 6a, inner radial wall 6b, inner tubular wall 6c and second piston 14.

With reference to the exemplary embodiment illustrated in Figure 4 to 8, first piston 14 and second piston 18 are preferably substantially cup-shaped.

In particular, first piston 14 preferably comprise a first bottom portion or spring compressor 14a fitted in a slidable manner on rod 12 and a second portion 14b extending cantilevered from first bottom portion 14a. Second portion 14b is preferably annular in shape and is configured/shaped so as to engage first gap 10, in a fluid tight and slidable manner.

Similarly, second piston 18 preferably comprise a first bottom portion or spring compressor 18a fitted in a slidable manner on rod 12 and a second portion 18b extending cantilevered from first bottom portion 18a. Second portion 18b is preferably annular in shape and is configured/shaped so as to engage second gap 11, in a fluid tight and slidable manner.

Preferably, first piston 14 and second piston 18 are further provided with sealing means, such as sealing gaskets, fluidly interposed respectively between second portions 14b and 18b and outer tubular wall 6a and inner tubular wall 6c.

With reference to the example illustrated in Figures 4 to 8, hydraulic actuator 1 further comprises a first opening 22 configured to put first variable volume chamber 16 in fluid communication with a source of pressurized hydraulic fluid (not illustrated).

In addition, hydraulic actuator 1 comprises a second opening 24 configured to put second variable volume chamber 20 in fluid communication with the source of pressurized hydraulic fluid.

Said source of pressurized hydraulic fluid may comprise a hydraulic pump configured to provide at outlet a pressurized flow of hydraulic fluid and a valve assembly interposed between the outlet of the hydraulic pump and the corresponding first opening 22 and/or second opening 24, in a manner per se known and therefore not further described.

Preferably, first opening 22 and second opening 24 are realized on outer tubular wall 6a, on opposite sides of inner radial wall 6b with respect to reference axis B.

The pressurized hydraulic fluid within first variable volume chamber 16 or second variable volume chamber 20 is preferably configured to exert a pressure on the corresponding first piston 14 or second piston 18 adapted to move this latter toward the corresponding end of housing 3, in particular away from inner radial wall 6b, thus increasing the volume of the corresponding variable volume chamber 16 or 20.

With reference to the preferred embodiment of the present invention, hydraulic actuator preferably comprises first elastic means 26, which are operatively interposed between housing 3 and first piston 14 and are configured to exert forces between these latter adapted to push first piston 14 towards the septum, in particular towards inner radial wall 6c, so as to reduce the volume of first variable volume chamber 16.

In other words, the forces exerted on first piston 14 by the pressurized hydraulic fluid within first variable volume chamber 16 and first elastic means 26 are opposite to each other.

Preferably, first elastic means 26 comprises a helicoidal spring fitted with clearance on rod 12 and interposed between housing 3, in particular the corresponding case back 8, and first piston 14.

In particular, first elastic means 16 are preferably adapted to be arranged against the first portion 14a of first piston 14.

In addition, hydraulic actuator preferably comprises second elastic means 28, which are operatively interposed between housing 3 and second piston 18 and are configured to exert forces between these latter adapted to push second piston 18 towards the septum, in particular towards inner radial wall 6c, so as to reduce the volume of second variable volume chamber 20.

In other words, the forces exerted on second piston 18 by the pressurized hydraulic fluid within second variable volume chamber 20 and second elastic means 28 are opposite to each other.

Preferably, second elastic means 28 comprises a helicoidal spring fitted with clearance on rod 12 and interposed between housing 3, in particular the corresponding case back 8, and second piston 18.

In particular, second elastic means 28 are preferably adapted to be arranged against the first portion 18a of second piston 18.

With reference to the preferred embodiment of the present invention illustrated in Figures 4 to 8, rod 12 is preferably provided with a first end of stroke member 30 configured to limit the stroke of first piston 14 along rod 12. First end of stroke member 30 is preferably interposed between first piston 14 and the corresponding axial end of housing 3, in particular the corresponding case back 8.

In other words, first end stroke member 32 is preferably arranged on the opposite side of first piston 14 with respect to first variable volume chamber 16 along reference axis B.

Preferably, first piston 14 can move along rod 12 between the septum, in particular the inner radial wall 6b, and the first end stroke member 32.

First end of stroke member 30 is preferably rigidly carried by rod 12, such that the same end of stroke member 30 moves integral with rod 12.

In use, first piston 14 is configured to be arranged abutting against end of stroke member 30, in order to push rod 12 in direction s₁ along reference axis B and arrange the same rod 12 in the second position.

Similarly, in use, when second variable volume chamber 20 is pressurized, second piston 18 is configured to move in direction s₂ along reference axis B, in order to abut against end of stroke member 32 and push rod 12 in direction s₂ along reference axis B, in order to arrange the same rod 12 in the third position.

In addition, rod 12 is preferably provided with a second end of stroke member 32 configured to limit the stroke of second piston 18 along rod 12. Second end of stroke member 32 is preferably interposed between second piston 18 and the corresponding axial end of housing 3, in particular the corresponding case back 8.

In other words, second end stroke member 32 is preferably arranged on the opposite side of second piston 18 with respect to second variable volume chamber 20 along reference axis B.

Preferably, second piston 18 can move along rod 12 between the septum, in particular the inner radial wall 6b, and the second end stroke member 32.

Second end of stroke member 32 is preferably rigidly carried by rod 12, such that the same end of stroke member 32 moves integral with rod 12.

In use, second piston 18 is configured to be arranged abutting against end of stroke member 32, in order to push rod 12 in direction s₂ along reference axis B and arrange the same rod 12 in the third position.

With reference to the preferred embodiment illustrated in Figures 4 to 8, hydraulic actuator 1 preferably comprises a first bushing or sleeve 34 and a second bushing or sleeve 36 carried on opposite ends of rod 12 and cooperating in a slidable manner with housing 3, in particular with the corresponding case back 8.

More in detail, first 34 and second bushing 36 are fitted in a rigid manner on the corresponding end of rod 12.

Preferably, first bushing 34 is arranged abutting against a corresponding shoulder of rod 12 and is locked in position by means of retaining means 31. Such retaining means preferably comprise a ring/washer 31a, a threaded ring nut 31b and/or other similar mechanical components adapted to lock bushing 34 on the rod 12.

Similarly, second bushing 36 is preferably arranged abutting against a corresponding shoulder of rod 12 and in particular is preferably interposed between such shoulder and fork 210.

Preferably, first 34 and second bushing 36 comprise respectively a tubular body 34a and 36a fitted on rod 12.

In addition, first 34 and second bushing 36 preferably comprise each an annular flange 34b and 36b extending cantilevered from the respective tubular body 34a and 36a in a radial direction.

Preferably, annular flanges 34b and 36b concur to form the respectively end of stroke member 30 and 32.

With reference to the exemplary embodiment illustrated in Figure 6, end of stroke member 32, in particular annular flange 36b, is preferably located along rod 12 so as to be arranged abutting against second piston 18 when rod 12 is arranged in the second position, stopping the movement of the same rod 12 and preventing the rod 12 to apply axial load on the relative case back 8, retaining means 9 or first bushing 34.

Similarly, with reference to the exemplary embodiment illustrated in Figure 8, end of stroke member 30, in particular annular flange 34b, is preferably located along rod 12 so as to be arranged abutting against first piston 14 when rod 12 is arranged in the third position, stopping the movement of the same rod 12 and preventing the rod 12 to apply axial load on the relative case back 8, and retaining means 9 or second bushing 36.

In particular, the axial positions of end of stroke members 30 and 32 along rod 12 and distances d₀, d₁ and d₂ are properly sized such that end of stroke 32 abuts against piston 18 before piston 14 abuts against end of stroke 30 when rod 12 approaches the second position and vice-versa end of stroke 30 abuts against piston 14 before piston 18 abuts against end of stroke 32 when rod 12 approaches the third position, to avoid applying axial loads on case backs 8 and retaining means 9.

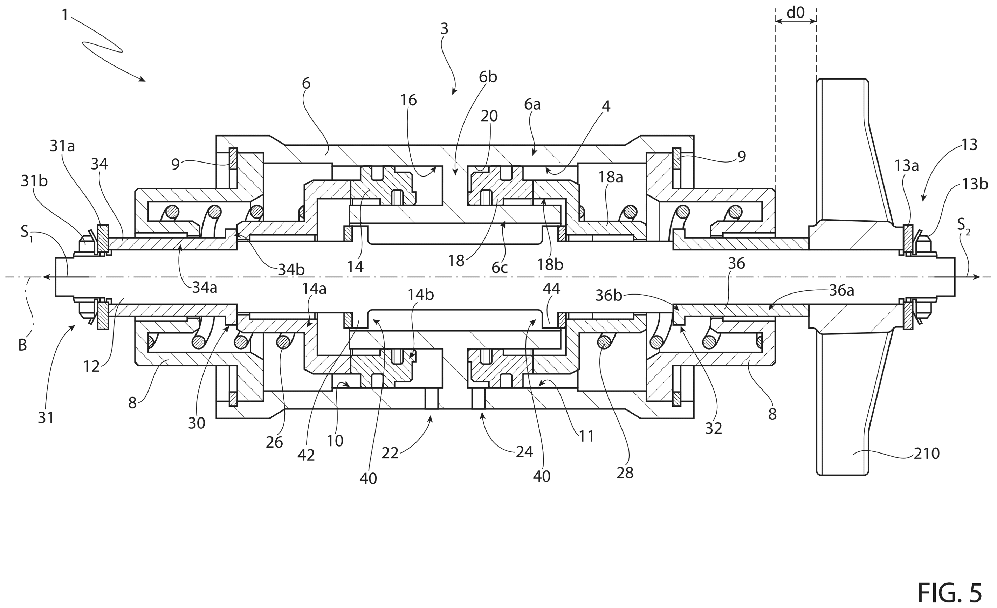

With reference to Figures 4, 5 and 6, first piston 14 is preferably movable between a first neutral position (Figure 4), a second pre-engaged position (Figure 5) and a third engaged position (Figure 6).

In the first neutral position, first piston 14 is preferably arranged at the separating septum, in particular at the inner radial wall 6b. More in detail, in the first neutral position, first piston 14 is preferably arranged abutting against the separating septum.

In the second pre-engaged position, first piston 14 is preferably arranged against end of stroke member 30, while rod 12 is in its first (neutral) position.

In the third engaged position, first piston 14 is preferably arranged against end of stroke member 30 and it pushes/urges rod 12 is in its second position.

Preferably, first elastic means 26 are configured to exert forces on first piston 14 adapted to arrange this latter in its first position.

In addition, the hydraulic fluid within first chamber 16 is preferably configured to exert forces on first piston 14 adapted to push this latter towards third position along reference axis B, against the forces exerted by first elastic means 26.

In addition, preferably the volume of first variable volume chamber 16 is minimum when first piston 14 is in its first position, and is maximum when first piston 14 is in its third position.

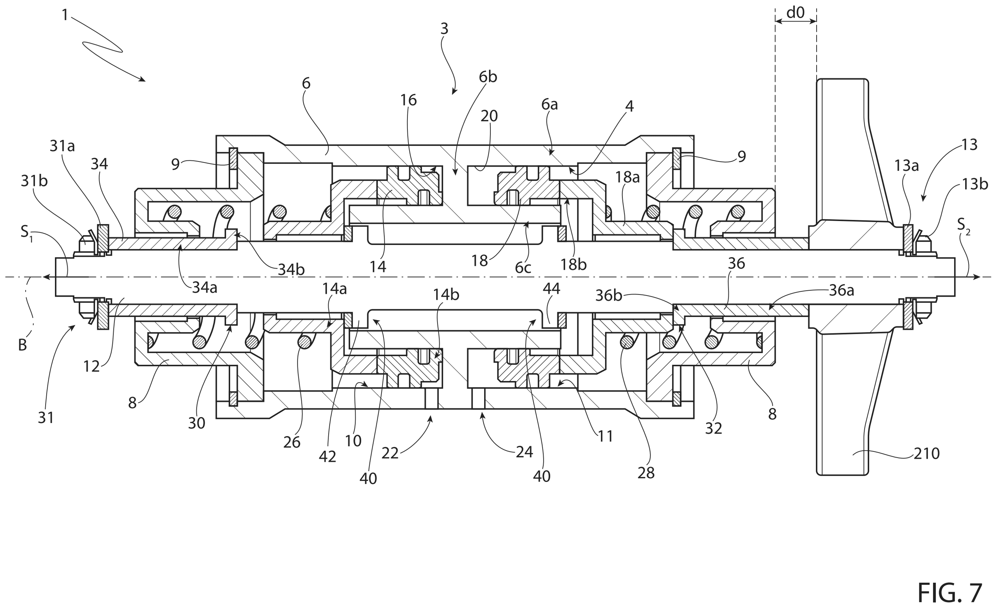

Similarly, with reference to Figures 4, 7 and 8, second piston 18 is preferably movable between a first neutral position (Figure 4), a second pre-engaged position (Figure 7) and a third engaged position (Figure 8).

In the first neutral position, second piston 18 is preferably arranged at the separating septum, in particular at the inner radial wall 6b. More in detail, in the first neutral position, second piston 18 is preferably arranged abutting against the separating septum.

In the second pre-engaged position, second piston 18 is preferably arranged against end of stroke member 32, while rod 12 is in its first (neutral) position.

In the third engaged position, second piston 18 is preferably arranged against end of stroke member 32 and it pushes/urges rod 12 is in its third position.

Preferably, second elastic means 28 are configured to exert forces on second piston 18 adapted to arrange this latter in its first position.

In addition, the hydraulic fluid within second chamber 20 is preferably configured to exert forces on second piston 18 adapted to push this latter towards third position along reference axis B, against the forces exerted by second elastic means 28.

Preferably, the volume of second variable volume chamber 20 is minimum when second piston 18 is in its first position, and is maximum when second piston 18 is in its third position.

In addition, with reference to Figure 6, when first piston 14 is arranged in its third position and pushes rod 12 in its second engaged position, preferably second piston 18 is configured to be arranged in its first neutral position and second end of stroke member 32 is configured to abut against second piston 18, thereby stopping the stroke of rod 12.

In other words, second piston 18 is preferably configured to act as an end of stroke member for rod 12 when first piston 14 arranges rod 12 in its second engaged position.

Vice versa, with reference to Figure 8, when second piston 18 is arranged in its third position and pushes rod 12 in its third engaged position, preferably first piston 14 is configured to be arranged in its first position and first end of stroke member 30 is configured to abut against first piston 14, thereby stopping the stroke of rod 12.

In other words, first piston 14 is preferably configured to act as an end of stroke member for rod 12 when second piston 18 arranges rod 12 in its third engaged position.

With reference to the preferred embodiment of the present invention illustrated in Figure 4 to 8, rod 12 preferably further comprises centering members 40 configured to maintain rod 12 in its first neutral position when both first piston 14 and second piston 18 are arranged in their respective first position, thus preventing movement of rod 12 along reference axis B.

Preferably, such centering members 40 comprises at least a pair of opposite shoulders 42 and 44 on rod 12, which are configured to be axially interposed between first piston 14 and said second piston 18 and are adapted to be arranged abutting respectively and at the same time against first piston 14 and on second piston 18 when these latter are arranged in their first position.

More in detail, shoulders 42 and 44 are preferably axially interposed between first 30 and second end of travel member 32 along reference axis B.

First piston 14 is preferably adapted to be interposed between first end of travel member 30 and first shoulder 42 along reference axis B. Second piston 18 is preferably adapted to be interposed between second end of travel member 32 and second shoulder 44 along reference axis B and

Preferably, shoulders 42 and 44 respectively comprises annular flanges extending cantilevered from rod 12 in a radial direction. Preferably, such annular flanged extends for a length, in radial direction, so as to be arranged skimming the inner tubular wall 6c.

With reference to the preferred embodiment of the present invention, centering members 40 preferably comprise cushioning pads adapted to be carried by the corresponding shoulder 42 and 44 and to be interposed between these latter and the corresponding piston 14 and 18, to cushion the impacts between these latter and avoid noises. Such cushioning pads may be realized in polymeric material, in particular rubber or similar elastomeric materials. In addition, such cushioning pads may be annular in shape and may be fitted on rod 12, aside the corresponding shoulder 44 and 44.

The operation of the above-described embodiment of the present invention is the following.

As illustrated in Figure 4, when first variable volume chamber 16 and second variable volume chamber 20 are not pressurized with hydraulic fluid, elastic means 26 and 28 push the corresponding pistons 14 and 18 toward the septum, to minimize the volume of the corresponding chambers 16 and 20. In such operation condition, centering members 40 hold rod 12 in its neutral position. Accordingly, the shifting fork 210 is in its first neutral position and dog clutch assembly 100 is disengaged.

The engagement of actuator 1 works as follows.

With reference to Figures 5 and 7, when respectively, first 16 or second variable volume chamber 20 start to be pressurized, they move the corresponding first piston 14 or second piston 18 towards its second pre-engaged position.

When the pressure within the first 16 or second variable volume chamber 20 increases, first 14 or second piston 18 is arranged against the corresponding end of stroke member 30 or 32 and then the same first 14 or second piston 18 moves the rod 12 towards the second or third engaged position.

Accordingly, sliding sleeve 160 is arranged in the second or third engaged position, to engage dog clutch and allow torque transmission between input shaft 110 and output shaft 120 via gear 140 or gear 150.

In addition, the stroke of rod 12 towards its second position is stopped when end of stroke member 32 abut against second piston 18, and vice versa the stroke of rod 12 towards its third position is stopped when end of stroke member 30 abut against first piston 18.

The disengagement of dog clutch assembly 100 by actuator 1 works as follows.

In view of the foregoing, the advantages of hydraulic actuator 1 are apparent.

In particular, the provision of two separate and independent pistons 14 and 18 slidably carried by rod 12 allows to realize a double effect hydraulic actuator with a simpler structure, since both piston can act as an end-of-stroke member for the rod when this latter is moving in the opposite direction with respect to the same piston.

In addition, this allows to simplify the structure of the housing, since no axial load is applied to the case backs 8 coupled to the tubular body 6 and therefore no axial thrust is applied to the Seegers rings retaining the case backs 8 on the same tubular body 6.

Moreover, the above configuration is particularly adapted to be employed with a negative dog clutch, in which the application of an axial force is required to maintain engagement between the toothed wheel of the same dog clutch, since in the full-engaged position one of the piston acts as an end of travel for the other engaged piston, without applying excessive loads the case backs 8.

It is clear that modifications can be made to the described dog clutch assembly, which do not extend beyond the scope of protection defined by the claims.

Proposed arrangements and connections may be substituted by equivalent ones.

In an alternative embodiment, bushings 34 and 36 may not be present and end of stroke members 30 and 32 may be realized integral with rod 12.

According to a possible alternative embodiment of the present invention, to disengage dog clutch assembly 100, the method may comprise the step of relieving the pressure within the chamber previously pressurized between first variable volume chamber 16 or second variable volume chamber 20 and at the same time temporarily pressurize the other one between first variable volume chamber 16 or second variable volume chamber 20 until rod reaches its first neutral position.

The above allows rod 12 to reach the neutral position faster, and at the same time allows to ensure a safe disengagement of dog clutch assembly 100.

According to a different embodiment of the present invention, fork 210/retaining means 13 and retaining means 31 may act as end of stroke members respectively when rod is in the third engaged position and in the second engaged position.

More in detail, when the rod 12 approaches the second engaged position, fork 210 may abut against housing 3, in particular case back 8, to stop the stroke of rod 12.

Vice-versa, when the rod 12 approaches the third engaged position, retaining means 31, in particular ring 31a, may abut against housing 3, in particular case back 8, to stop the stroke of rod 12.

## Claims

1. A hydraulic actuator (1) for a negative dog clutch assembly (100) of a transmission assembly of a work vehicle;
said hydraulic actuator (1) comprising:
• a housing (3) extending along a reference axis (B) and defining at least a closed inner volume (4),
• a rod (12), which extends along said reference axis (B), engages in a slidable manner said housing (3) and is configured to be operatively connected to an actuation member (160, 210) of said dog clutch assembly (100),
• a first piston (14) housed within said closed inner volume (4), cooperating in a fluid tight and slidable manner with said housing (3) and configured to define at least a first variable volume chamber (16) within said closed inner volume (4),
• a second piston (16) housed within said closed inner volume (4), cooperating in a fluid tight and slidable manner with said housing (3) and configured to define at least a second variable volume chamber (16) within said closed inner volume (4) fluidly separated from said first variable volume chamber (16),
said rod (12) being movable between a first position in which it is configured to maintain said dog clutch assembly (100) disengaged, a second position in which it is configured to arrange said dog clutch assembly (100) in a first engaged position, and a third position in which it is configured to arrange said dog clutch assembly (100) in a second engaged position,
said housing (3) comprising a septum fluidly separating said first variable volume chamber (16) from said second variable volume chamber (20) and engaged in a slidable manner by said rod (12),
said first piston (14) and said second piston (16) being slidably carried by said rod (12) and are arranged on opposite sides of said septum,
wherein said first piston (14) is configured to push said rod (12) in a first direction (s₁) parallel to said reference axis (B), in order to arrange said rod in said second position, and
wherein said second piston (18) is configured to push said rod (12) in a second direction (s₂) parallel to said reference axis (B) and opposite to said first direction (s₁), in order to arrange said rod in said third position.

2. Hydraulic actuator according to claim 1, further comprises a first opening (22) configured to put said first variable volume chamber (16) in fluid communication with a source of pressurized hydraulic fluid, and a second opening (24) configured to put said second variable volume chamber (20) in fluid communication with the source of pressurized hydraulic fluid.

3. Hydraulic actuator according to claim 1 or 2, wherein said second piston (18) is configured to act as an end of stroke member for said rod (12) when said rod (12) approaches said second position, and vice-versa said first piston (14) is configured to act as an end of stroke member for said rod (12) when said rod (12) approaches said third position.

4. Hydraulic actuator according to claim 1, 2 or 3, wherein said first variable volume chamber (16) is defined between said first piston (14), said housing (3) and said septum, and said second variable volume chamber (16) is defined between said second piston (18), said housing (3) and said septum.

5. Hydraulic actuator according to any of the preceding claims, further comprising first elastic means (26) operatively interposed between said housing (3) and said first piston (14) within said closed inner volume (4) and configured to exert forces between these latter adapted to push said first piston (14) towards said septum, and second elastic means (28) operatively interposed between said housing (3) and second first piston (18) within said closed inner volume (4) and configured to exert forces between these latter adapted to push said second piston (18) towards said septum.

6. Hydraulic actuator according to claim 5, wherein said rod (12) comprises: a first end of stroke member (30) axially interposed between first piston (14) and the corresponding axial end of said housing (3) and configured to limit the stroke of said first piston (14) with respect to said rod (12) and vice-versa; and a second end of stroke member (32) axially interposed between second piston (18) and the corresponding axial end of said housing (3) and configured to limit the stroke of said second piston (18) with respect to said rod (12) and vice-versa
said first piston (14) being configured to be arranged abutting against said first end of stroke member (30), in order to push said rod (12) toward said second position in said first direction (s₁),
said second piston (18) being configured to be arranged abutting against said second end of stroke member (32), in order to push said rod (12) toward said third position in said second direction (s₂).

7. Hydraulic actuator according to claim 6, wherein said first piston (14) is movable along said reference axis (B) between:
a first neutral position in which said first piston (14) is arranged at the septum and the volume of said first variable volume chamber (16) is minimum,
a first pre-engaged position in which said first piston (14) is arranged against abutting said first end of stroke member (30) and said rod (12) is in its first position, and
a first engaged position in which said first piston (14) is arranged against abutting said first end of stroke member (30) and said rod (12) is arranged in its second position,
said second piston (18) is movable along said reference axis (B) between:
a second neutral position in which said second piston (18) is arranged at the septum and the volume of said second variable volume chamber (20) is minimum,
a second pre-engaged position in which said second piston (18) is arranged against abutting said second end of stroke member (32) and said rod (12) is in its first position, and
a second engaged position in which said second piston (18) is arranged against abutting said second end of stroke member (32) and said rod (12) is arranged in its third position.

8. Hydraulic actuator according to claim 7, wherein said first elastic means (26) are configured to exert forces on said first piston (14) adapted to push this latter towards its first neutral position and said second elastic means (28) are configured to exert forces on said second piston (18) adapted to push this latter towards its second neutral position.

9. Hydraulic actuator according to claim 7 or 8, wherein said rod (12) comprises centering members (40) configured to maintain the same rod (12) in its first position when said first piston (14) is in its first neutral position and said second piston (18) is in its second neutral position.

10. Hydraulic actuator according to claim 9, wherein said centering members (40) comprise a pair of opposite shoulders (42, 44) configured to be axially interposed between said first piston (14) and said second piston (18) and configured to be arranged abutting respectively and at the same time against said first piston (14) when this latter is in the first neutral position and against said second piston (18) when these latter is in the second neutral position.

11. Hydraulic actuator according to any of the preceding claims, wherein said housing (3) comprises a tubular body (6) extending along said reference axis (B) and at least one case backs (8) arranged at an axial end of said body (6).

12. Hydraulic actuator according to claim 11, wherein said body (6) comprises an outer tubular wall (6a) extending along said reference axis (B) and at least one inner radial wall (6b), which extends cantilevered from said outer tubular wall (6b) within said closed inner volume (4), lays on a plane transversal to said reference axis (B) and concur to form said septum.

13. Hydraulic actuator according to claim 12, wherein said body (6) further comprises an inner tubular wall (6c), which extends along said reference axis (B) cantilevered from said inner radial wall (6b), coaxially to and spaced from said outer tubular wall (6a), so as to delimit with said outer tubular wall (6a) a first annular gap (10) and a second annular gap (11) on opposite sides of said inner radial wall (6b).

14. Hydraulic actuator according to claim 13, wherein said first piston (14) is configured to engage said first annular gap (10) and is configured to cooperate in a fluid tight and slidable manner with said outer tubular wall (6a) and said inner tubular wall (6c), and said second piston (18) is configured to engage said second annular gap (11) and is configured to cooperate in a fluid tight and slidable manner with said outer tubular wall (6a) and said inner tubular wall (6c).

15. A method for controlling a hydraulic actuator realized according to any of claims from 6 to 14, comprising the step of:
a) pressurizing a first one between said first variable volume chamber (16) or said second variable volume chamber (20) with a first pressure level, in order to arrange respectively said first piston (14) or said second piston (18) in abutment against said first end of stroke member (30) or said second end of stroke member (32), while said rod (12) is in its first position and
b) pressurizing said first one between said first variable volume chamber (16) or said second variable volume chamber (20) with a second pressure level, in order to arrange said rod (12) respectively in its second position or third position,
wherein said second pressure level is higher than said first pressure level.
